# EUROPEAN PATENT APPLICATION

(11) **EP 4 814 793 A1**
(43) Date of publication of application: **30.09.2026**
(21) Application number: 25167171.5
(22) Date of filing: 28.03.2025
(51) Int. Cl.: G06N 3/0475

(54) **METHODS AND SYSTEMS FOR AI MODELS**

(71) Applicant: British Telecommunications Public Limited Company, London E1 8EE (GB)
(72) Inventor: The designation of the inventor has not yet been filed
(74) Representative: British Telecommunications public limited company Intellectual Property Department

(57) **Abstract**

A computer-implemented method comprising: receiving a prompt for an artificial intelligence, Al, model, the prompt comprising a sequence of input tokens; obtaining data indicative of a read rate; obtaining a matrix embedding of at least some of the input tokens of the sequence of input tokens; obtaining a positional encoding matrix which encodes the position of each of at least some of the input tokens within the sequence of input tokens; and combining the matrix embedding and the positional encoding matrix to generate an encodings matrix. The encodings matrix encodes only: a first subset of the sequence of input tokens, wherein the first subset comprises fewer tokens than the sequence of input tokens; and a position of each of the first subset of input tokens within the sequence of input tokens. The first subset of the sequence of input tokens is determined based on the read rate.

## Description

### TECHNICAL FIELD

The present disclosure relates to methods relating to artificial intelligence models. More specifically, aspects relate to a computer-implemented method, a computer system including a processor and memory storing computer program code for performing the steps of the method, a transformer model and a computer program element comprising computer program code to, when loaded into a computer system and executed thereon, cause the computer to perform the steps of the method.

### BACKGROUND

Artificial intelligence (Al) models are used in many different fields. Various types of data can be input into and used by an Al model. However, in order for the model to process that data, it must be provided to the model in a format which the model can understand and process.

One approach to this is to generate vector embeddings of the input and pass those to the model. Such vector embeddings represent the data as vectors. In the case of natural language processing, for example, the vector embeddings encode the semantic meaning of the respective words. Words with similar meaning will have corresponding vector embeddings which are close to each other in vector space. Various methods for generating vector embeddings exist.

Some Al models, such as transformer models, also make use input relating to the structure of a prompt. Transformer models make use of parallel processing to process each word in a text prompt independently of the others. Accordingly, input relating to the position of each word in the prompt is also provided to the model so that information is not lost.

Al models typically handle vast volumes of data and as a result, they can be slow and computationally expensive to run. It would be advantageous to reduce the computational resources required by such models and/or reduce the processing time of such models.

### SUMMARY

According to a first aspect there is provided a computer-implemented method comprising: receiving a prompt for an artificial intelligence, Al, model, the prompt comprising a sequence of input tokens; obtaining data indicative of a read rate; obtaining a matrix embedding of at least some of the input tokens of the sequence of input tokens; obtaining a positional encoding matrix which encodes a position of each of at least some of the input tokens within the sequence of input tokens; and combining the matrix embedding and the positional encoding matrix to generate an encodings matrix. The encodings matrix encodes only: a first subset of the sequence of input tokens, wherein the first subset comprises fewer tokens than the sequence of input tokens; and a position of each of the first subset of input tokens within the sequence of input tokens. The first subset of the sequence of input tokens is determined based on the read rate.

By obtaining an encodings matrix which encodes only some of the input tokens (and the positions of those input tokens), less processing is required by the Al model. This reduced processing may be a result of less processing being required to arrive at the encodings matrix and/or the result of less processing being required by the Al model in processing the encodings matrix. This reduction in processing may mean that fewer computational resources are needed. Or, for a given amount of computational resources, the processing time may be reduced.

The read rate effectively determines which of the input tokens in the sequence will be encoded (both the input tokens themselves and their positions in the sequence, as will be explained below). The read rate also effectively determines how many of the tokens will be encoded (i.e. the size of the first subset). Depending on the value of the read rate, r, every rth token may be encoded (for example). In such an example, the higher the value of r, the fewer tokens will be encoded by the encodings matrix. The number of tokens in the first subset as compared to the total number of input tokens in the sequence will affect both the amount of processing required by the Al model (which is generally desired to be low) and the accuracy of the output of the model (which is generally desired to be high). It will be appreciated that a balance must therefore be struck between accuracy on one hand and computational resources and/or processing time on the other. A suitable read rate for a given input type (i.e. prompt type) or input length (i.e. prompt length) may be determined by trial and error, for example. In some embodiments, if the read rate is equal to or greater than the number of input tokens in the sequence of input tokens, the encodings matrix may be obtained according to a predetermined rule. For example, only the first input token in the sequence of input tokens may be encoded in the encodings matrix.

The prompt for the Al model may be received in any suitable way. For example, the prompt may be input by a user or may be received from a software module. The prompt may be obtained, e.g. obtained from a memory location. Similarly, the data indicative of a read rate may be obtained in any suitable way. For example, the data indicative of the read rate may be stored in a memory and accessed over a network. Alternatively, obtaining data indicative of a read rate may comprise determining the data as part of the method. For example, the data may depend on one or more variables, such as the number of input tokens in the sequence of input tokens. The data indicative of the read rate may be accessed from a look-up table according to the number of input tokens in the sequence or may be calculated, for example based on the one or more variables.

In some embodiments the sequence of input tokens comprises a second subset of input tokens, different to the first subset. In some embodiments, those input tokens which are not part of the first subset belong to the second subset. Put differently, the sequence of input tokens comprises (and optionally is made up of) the first subset and a second subset.

The positional encoding matrix may comprise a vector corresponding to each of the input tokens in the sequence of input tokens. For each of the input tokens in the first subset, the corresponding vector may be a positional encoding vector which encodes the position of the respective input token within the sequence of input tokens. For each of the input tokens in the second subset, the corresponding vector may be a vector consisting of a pre-determined value. Put differently, each value in the corresponding vector may a pre-determined value, optionally the same pre-determined value. In some embodiments, the predetermined value may be zero. In other embodiments, a different predetermined value (e.g. one) may be used. The pre-determined value may be independent of the input tokens and/or their respective positions within the sequence of input tokens.

In some embodiments obtaining the positional encoding matrix comprises obtaining positional encoding vectors only for the first subset of input tokens. In other words, the method comprises only calculating encoding vectors for the first subset of input tokens and not for the second subset of input tokens. An advantage of this is that unnecessary calculations (i.e. those for the second subset) are avoided and the required computational resources and/or processing time are reduced as a result.

As an alternative, in some embodiments the method comprises obtaining positional encoding vectors for all of the input tokens in the sequence of input tokens and then setting the values of the vectors which correspond to the input tokens in the second subset to a predetermined value (e.g. zero). This option is particularly simple.

In some embodiments obtaining the positional encoding matrix comprises calculating the values of the positional encoding matrix using one or more mathematical functions. Any suitable mathematical functions may be used. Some example functions include sine, cosine and Gaussian functions.

In some embodiments, the mathematical functions are a function of the read rate, r.

In some embodiments, the positional encoding matrix is calculated using sine and cosine functions which are dependent on the read rate, r. In an example, the following functions may be used: $P \left(k,2i,r\right) = sin \left(\frac{k + r}{{n}^{\left(2i/d\right)}}\right)$ $P \left(k,2i+1,r\right) = cos \left(\frac{k + r}{{n}^{\left(2i/d\right)}}\right)$
k is the position of the given token in the input sequence (i.e. k=0 for the first token, k=1 for the second token and so on.)
d is the dimension of the output embedding space. d is a positive integer. For example, d may be 4, 8 or 10.
P(k,2i,r) is the positional function for mapping the position k in the r-selected input sequence to index (k,i) of the positional encoding matrix.
r is the read rate. r may be any positive integer. For example, r may be 1, 2 or 3.
i maps onto the matrix column indices. 0 ≤ i < (d/2) It can be seen from the equations above that for odd-numbered matrix columns a cosine function is used and for even-numbered matrix columns a sine function is used.
n is a user-defined scalar. n may be 100, 1000, or 10000 for example.

In some embodiments, the following functions may be used: $P \left(k,2i,r\right) = sin \left(\frac{kr}{{n}^{\left(2i/d\right)}}\right)$ $P \left(k,2i+1,r\right) = cos \left(\frac{kr}{{n}^{\left(2i/d\right)}}\right)$ The variables k, i, r, n and d are the same as described above.

As mentioned above, in some embodiments the sequence of input tokens comprises a second subset of input tokens, different to the first subset. In some embodiments, the matrix embedding comprises a vector corresponding to each of the input tokens in the sequence of input tokens. For each of the input tokens in the first subset, the corresponding vector may be a vector embedding which encodes the respective input token. For each of the input tokens in the second subset of input tokens, the corresponding vector may be a vector consisting of a pre-determined value (e.g. zero or one).

In some embodiments obtaining the matrix embedding comprises obtaining vector embeddings for all of the input tokens in the sequence of input tokens and then setting the values of the vectors which correspond to the input tokens in the second subset to a pre-determined value. The pre-determined value may be zero or one, for example. This is a particularly simple way of obtaining the matrix embedding.

As an alternative, in some embodiments obtaining the matrix embedding comprises obtaining vector embeddings only for the first subset of input tokens. In other words, the method comprises only calculating vector embeddings for the input tokens in first subset of input tokens and not for input tokens in the second subset. An advantage of this is that unnecessary calculations (i.e. those for the second subset) are avoided and the required computational resources and/or processing time are reduced as a result.

The input tokens may have any format. In some embodiments the input tokens are any of the following: words, characters and network data. Network data is data relating to a network, e.g. a network of computers. The network data may be network traffic data and/or internet protocol data, for example. The data may be indicative of any of: a level of performance of the network, one of more data transfers within the network (e.g. between computers) and a structure of the network.

The Al model may be any type of Al model. In some embodiments the Al model is a transformer model. The transformer model may be an encoder-decoder model, an encoder-only model or a decoder-only model, for example. In embodiments in which the method is used in conjunction with an encoder-decoder model, the method described may be used as part of an encoder block (i.e. to encode the sequence of tokens input by a user or a software module for passing to a decoder block) and/or as part of a decoder block (e.g. to encode the target data, which may otherwise be referred to as the outputs). Transformer models make use of parallel processing of input tokens and so require information concerning the position of each token within the sequence of input tokens as an input (otherwise that information would be lost). The Al model may be a large language model (LLM). Such an LLM may be used for natural language processing, for example for translating text or for generating text.

In some embodiments combining the matrix embedding and the positional encoding matrix comprises adding the matrix embedding and the positional encoding matrix (by matrix addition). Different methods may be used instead. For example, in some embodiments combining the matrix embedding and the positional encoding matrix comprises concatenating the matrix embedding and the positional encoding matrix.

In some embodiments obtaining data indicative of a read rate comprises determining the read rate.

Determining the read rate may comprise determining the read rate based on one or more characteristics of the input tokens and/or one or more characteristics of the sequence of input tokens, for example the number of input tokens in the sequence.

Alternatively or additionally, determining the read rate may comprise determining the read rate based on user input and/or meta data associated with the prompt and/or metadata associated with the input tokens (e.g. a data type of the input tokens).

In some embodiments, the method comprises generating a response to the prompt based on the encodings matrix. In some embodiments, the method comprises outputting the response. Outputting the response may comprise providing the response to a software system or module or displaying or otherwise providing the prompt to a user.

In some embodiments the method comprises outputting the encodings matrix to a layer (e.g. a next layer) of the Al model; receiving response data in response to the encodings matrix from the Al model; and outputting a response to the prompt (e.g. to a user), wherein the response is determined based on the response data. In other words, the method may comprise additional steps of passing the encodings matrix to the Al model or a part of the Al model, receiving an output from the Al model and displaying or otherwise providing the output (or data based on the output) to a user. By providing an encodings matrix which encodes only a subset of the input tokens of the sequence of input tokens to the Al model, the amount of processing required by the Al model is reduced. Specifically, there is less data for the Al model to process. Accordingly, the computational resources and/or processing time may be reduced.

According to a second aspect there is provided an Al model comprising a module which is configured to carry out a method as disclosed herein. The model may be a transformer model Such a transformer model may be an encoder-decoder model, an encoder-only model or a decoder-only model, for example. In embodiments in which the model is an encoder-decoder model, the module may be part of an encoder block (i.e. to encode the sequence of tokens input by a user or a software module for passing to a decoder block) and/or as part of a decoder block (e.g. to encode the target data, which may otherwise be referred to as the outputs).

According to a third aspect there is provided a computer system including a processor and memory storing computer program code for performing the steps of a method as disclosed herein.

According to a fourth aspect there is provided a computer program comprising instructions which, when the program is executed by a computer, cause the computer to carry out a method as disclosed herein.

According to a fifth aspect there is provided a computer-readable data carrier having stored thereon a computer program as disclosed herein.

### BRIEF DESCRIPTION OF THE DRAWINGS

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.
Figure 1 schematically illustrates an encoder-decoder transformer model;
Figure 2 schematically illustrates an encoder-only transformer model;
Figure 3 schematically illustrates a decoder-only transformer model;
Figure 4 schematically illustrates a computer-implemented method of obtaining an encodings matrix;
Figure 5 schematically illustrates an example encodings matrix;
Figure 6 schematically illustrates a further computer-implemented method of obtaining an encodings matrix;
Figure 7 schematically illustrates a further computer-implemented method of obtaining an encodings matrix;
Figure 8 schematically illustrates an example matrix embedding;
Figure 9 schematically illustrates an example modified matrix embedding;
Figure 10 schematically illustrates an example modified positional encoding matrix;
Figure 11 schematically illustrates a further computer-implemented method of obtaining an encodings matrix; and
Figure 12 schematically illustrates an example data processing system.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

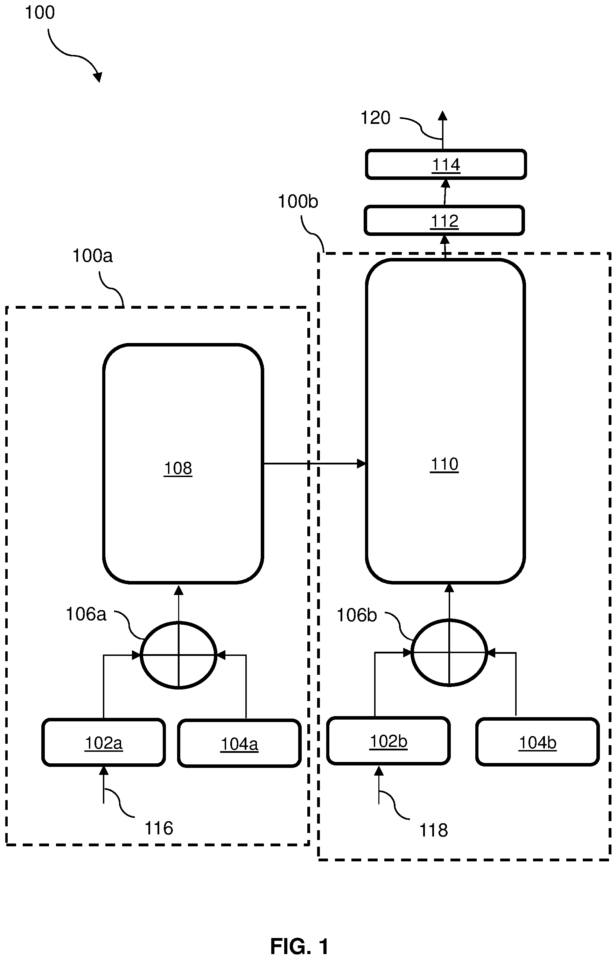

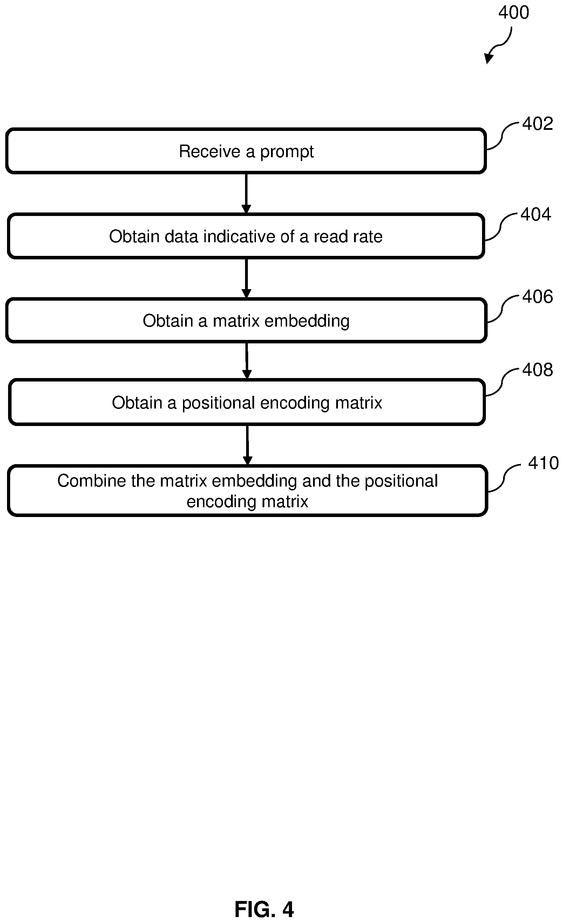

Figure 1 illustrates a block diagram of a known transformer model 100 (referred to hereafter as 'the model'). The invention disclosed herein may be applied to such a model, as will be explained below. A brief description of the structure and operation of the model 100 is provided and the differences between the known model 100 and the invention will be explained with reference to Figures 4 to 11.

The model 100 is an encoder-decoder transformer model and comprises an encoder block 100a and a decoder block 100b. The encoder block 100a comprises the following components:
- an embedding module 102a;
- a position encoding module 104a;
- an encodings module 106a; and
- an encoder module 108.
The decoder block 100b comprises the following components:
- an embedding module 102b;
- a position encoding module 104b;
- an encodings module 106b; and
- a decoder module 110.
The model 100 further comprises a linear module 112 and a softmax module 114.

Operation of the model 100 will now be described. First, a prompt is input into the model 100. Specifically, the prompt, which is a sequence of input tokens, is input into the embedding module 102a of the encoder block 100a, as indicated by arrow 116. In this example, the input tokens are each a word and the sequence of input tokens is a string (e.g. a sentence) made up of those words. The embedding module 102a converts the sequence of input tokens into a matrix embedding using a standard embedding method as will be familiar to a person skilled in the art. The matrix embedding represents the sequence of input tokens as a matrix. The matrix embedding comprises one vector (in this case a row of the matrix) for each input token. Taking the example prompt 'January February March April', the matrix would comprise four rows, one row (vector) for each word.

The position encoding module 104a of the encoder block 100a encodes the position of each input token within the sequence of input tokens. For the example prompt 'January February March April', each of the four positions (i.e. 1^{st}, 2^{nd}, 3^{rd}, 4^{th}) are encoded. The position encoding module 104a generates a positional encoding matrix. In known methods, this is done using sine and cosine functions, as follows: $P \left(k,2i\right) = sin \left(\frac{k}{{n}^{\left(2i/d\right)}}\right)$ $P \left(k,2i+1\right) = cos \left(\frac{k}{{n}^{\left(2i/d\right)}}\right)$
k is the position of the given token in the input sequence (i.e. k=0 for the first token, k=1 for the second token and so on.)
d is the dimension of the output embedding space. In this example, d=4.
P(k,2i) is the positional function for mapping the position k in the sequence to index (k,i) of the positional encoding matrix.
i maps onto the matrix column indices. 0 ≤ i < (d/2) It can be seen from the equations above that for odd-numbered matrix columns a cosine function is used and for even-numbered matrix columns a sine function is used.
n is a user-defined scalar. Some typical values of n are 100, 1000, 10,000. For a four-token sequence, n=100 is a suitable value but different values of n may be used instead.

The matrix embedding output by the embedding module 102a and the positional encoding matrix output by the position encoding module 104a are then combined by the encodings module 106a. Specifically, the encodings module 106a combines the matrix embedding and positional encoding matrix by adding them together by matrix addition. The result is an encodings matrix which is output by the encodings module 106a and input into the encoder module 108. The details of the encoder module 108 are beyond the scope of this description but will be familiar to a person skilled in the art. Briefly, the encoder module 108 comprises a plurality of layers (e.g. six) and makes use of self-attention mechanisms. The output of the encoder module 108 is a fixed-size vector which is a representation of the whole string (i.e. the sequence of input tokens). This fixed-size vector is fed into the decoder module 110 of the decoder block 100b.

A further input, for the decoder module 110, is generated by the embedding module 102b, the position encoding module 104b and the encodings module 106b of the decoder block 100b, as will now be described. The function of the decoder module 110 (using the further input and the fixed-size vector output by the encoder module 108) will be described below.

The further input is generated based on target data (which may otherwise be referred to as 'outputs') in the same way as the encodings matrix. The target data (which is the desired output given the input prompt) is input into the embedding module 102b as indicated by arrow 118. The target data is a sequence of tokens. Taking the example prompt 'January February March April', the desired output may be a prediction of the next word in the sequence (for the purposes of text generation). The target data may, for example, correspond to the desired output, but with each token shifted one place to the right (i.e. 'February March April May'). A matrix embedding of this target data is generated in a corresponding way to that used in the encoder block 100a and so a description will not be repeated here.

The position encoding module 104b generates a positional encoding matrix in a corresponding way to that used in the encoder block 100a and so the description will not be repeated here.

The positional encoding matrix and the matrix embedding is combined, by matrix addition, by the encodings module 106b (in an analogous way as that used in the encoder block 100a described above) to generate an encodings matrix. The encodings matrix is fed into the decoder module 110 and passed through the model.

The details of the decoder module 110 are beyond the scope of this description and will be familiar to a person skilled in the art. In brief, the decoder module 110 comprises a plurality of layers (e.g. 6) and also makes use of self-attention mechanisms.

The output of the decoder module 110 is passed through a linear layer 112 which acts as a classifier. In short, the linear layer 112 projects the output of the decoder module 110 into a vector for each word of the output sentence. The length of each vector (i.e. the number of values in the array) depends on the number of classes involved, i.e. the number of words in the target vocabulary. For example, if the transformer model considers 5000 words as possible outputs, the output of the linear layer is a set of vectors, each having a length of 5000. A vector is computed for each word of the output sequence. For example, for a four-word output, four vectors will be output by the linear layer 112 (one for each word).

The output of the linear layer is input into a softmax layer 114 which, for each word in the output, transforms each value of the corresponding vector into a probability for each of the 5000 possible words. The word having the highest probability is the predicted word for that given position in the output sentence. The predicted words (if there are more than one) are concatenated into the output string (e.g. a sentence) and displayed (e.g. for reading by a user). In this case, the displayed output would be 'May'.

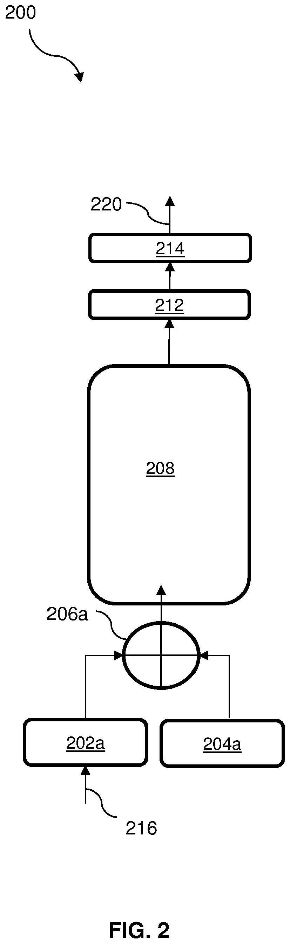

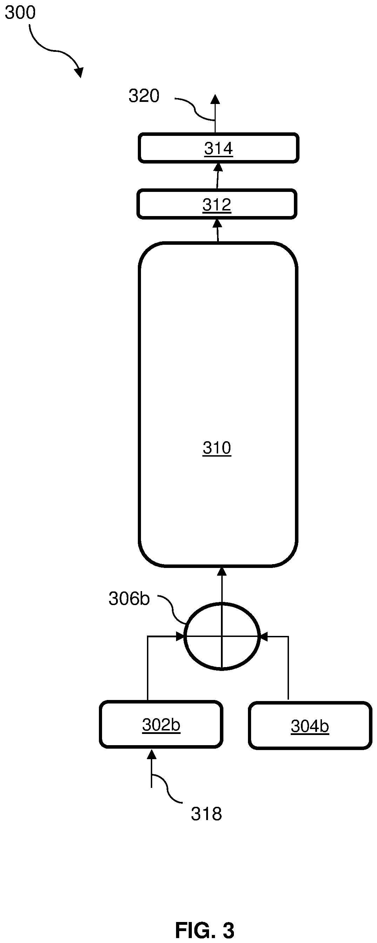

The model 100 illustrated in Figure 1 is an encoder-decoder model. Two other main types of transformer are shown in Figures 2 and 3 respectively. Figure 2 illustrates an encoder-only model 200. Figure 3 illustrates a decoder-only model 300. Each of the models 200, 300 comprises components which correspond to those illustrated in and described with reference to Figure 1 and a description of those components and their functions will not be repeated here. Corresponding reference numerals are used in Figures 2 and 3 (i.e. corresponding to those used in Figure 1), incremented by 100 (for figure 2) and by 200 (for figure 3).

As mentioned above, Al models generally (including transformer models) need to process large amounts of data. A four-letter string was used as an example prompt above but it will be appreciated that much longer prompts may be input into the model and a large number of those prompts may need to be processed to complete any given request by a user of a model (e.g. the translation of a long document, comprising a large number of sentences).

The invention of the present application will now be described with reference to Figures 4 to 11. By way of an overview, the invention relates to the use of a read rate to skip over some of the input tokens in the sequence of input tokens. Taking the example input sequence 'January February March April', the inventors have recognised that two (for example) of the input tokens can be left out of the encodings provided to the model (i.e. provided as 'blanks') without severely impacting the accuracy of the output of the model. This means that less processing is required by the model, thereby reducing the computational resources required by the model and/or reducing the processing time.

The inventors have devised various ways of implementing this read rate which will be described below. Figure 4 illustrates the overall method as a flow diagram.

With reference to Figure 4, a computer-implemented method 400 is described. In a first step 402, a prompt for an Al model is received. This prompt comprises a sequence of input tokens. In this example, each input token is a word and the sequence of input tokens is a string made up of those words. In this example, the sequence of input tokens is 'January February March April". In other embodiments, the input tokens could be any other type of data, for example characters, numbers, network data. In some examples, the input tokens could each be data regarding a network, for example a network of computers.

The prompt is input by a user but in other examples the prompt may be input by a software system or module, for example.

In a second step 404, data indicative of a read rate is obtained. The data indicative of a read rate is a value, specifically a positive integer value. In this example, the data indicative of a read rate is a value r and r=1. The data is obtained from a memory location.

In other examples, the data indicative of a read rate may be in another form and/or may be obtained in a different way. For example, the data indicative of the read rate may be stored in a memory and accessed over a network. Alternatively, obtaining data indicative of a read rate may comprise determining the data as part of the method. For example, the data may depend on one or more variables, such as the number of input tokens in the sequence of input tokens. The data indicative of the read rate may be accessed from a look-up table according to the number of input tokens in the sequence or may be calculated, for example based on the one or more variables.

In a third step 406, a matrix embedding of at least a portion of the sequence of input tokens is obtained. This can be done in a number of ways which will be described below. The third step 406 may comprise some pre-processing of the prompt, before the matrix embedding is obtained. For example, the prompt may be pre-processed into a sequence of input tokens. However, the prompt may already be in the appropriate format when it is received.

In a fourth step 408, a positional encoding matrix is obtained. The positional encoding matrix encodes the position of each of at least a subset (i.e. at least some) of the input tokens within the sequence of input tokens. This can also be done in a number of ways which will be described below.

In a fifth step 410, the matrix embedding and the positional encoding matrix are combined to produce an encodings matrix. In this embodiment, this is done by matrix addition but in other embodiments different methods may be used, e.g. matrix concatenation.

A key feature of this method is that the encodings matrix encodes only:
- a first subset of the sequence of input tokens, wherein the first subset comprises fewer tokens than the sequence of input tokens; and
- the position of each of the first subset of input tokens within the sequence of input tokens.
The first subset of the input tokens is determined based on the read rate. In this way, the read rate is implemented by producing an encodings matrix which does not encode each and every input token in the sequence of input tokens (and the position of each and every token within the sequence), as in known methods e.g. those described with reference to figures 1 to 3, but encodes only some (i.e. a subset) of the input tokens (and the position of the input tokens of the subset in the sequence). In this way, some of the input tokens are skipped over (i.e. ignored) and the amount of processing required as part of the method is reduced.

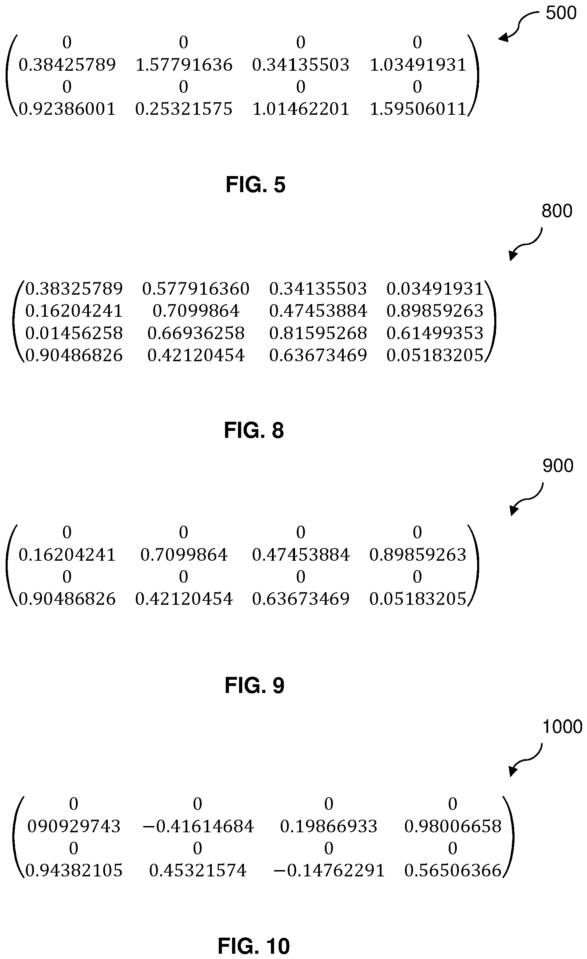

An example encodings matrix 500 is illustrated in Figure 5. Taking the example sequence of input tokens 'January February March April", the encodings matrix encodes only a first subset of the input tokens and the position of each token in that first subset within the sequence of input tokens. In this example, the first subset consists of the second and fourth tokens, i.e. the words 'February' and 'April'. The remaining words (i.e. the first and third tokens 'January' and 'March') are skipped over. The values corresponding to those tokens (i.e. the first and third rows) are set to zero. In this way, only information regarding a first subset of the input tokens is passed to the encoder module (see e.g. encoder module 108 in Figure 1) of the transformer module and so less processing is carried out by the model, thereby saving time and/or computational resources. It will be appreciated that another value, instead of zero, may be used for the rows corresponding to the skipped-over tokens. For example, the value of one may be used instead.

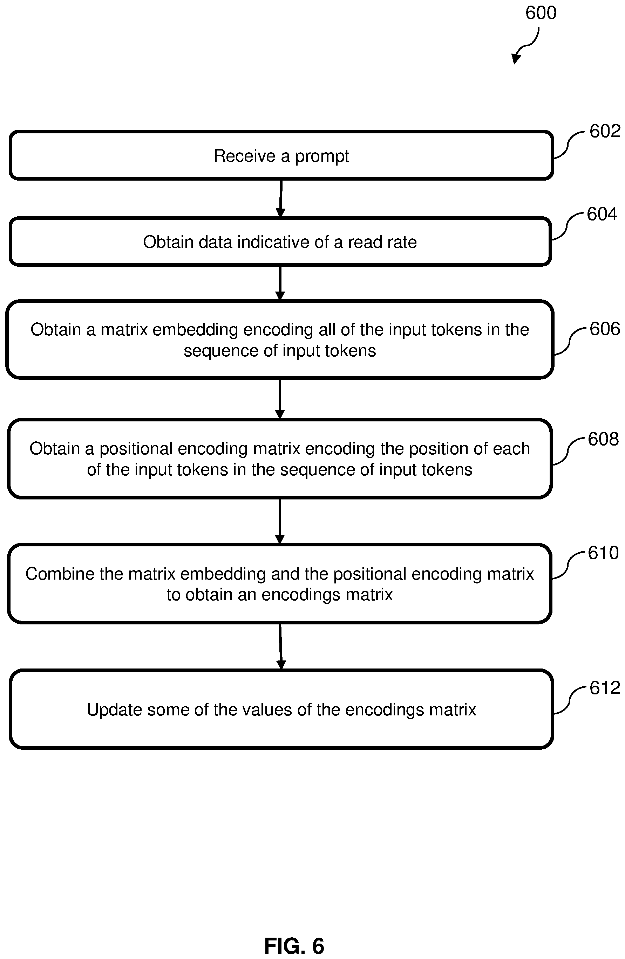

Such an encodings matrix may be generated in a number of different ways, as will now be described with reference to Figures 6, 7 and 11. In each case, the full method (corresponding to that shown in Figure 4) is described, but the first two steps (corresponding to steps 402 and 404) are the same in each case.

A first method 600 of obtaining the encodings matrix is illustrated in Figure 6. Reference numerals corresponding to those in Figure 4 are used, incremented by 200. By way of an overview of the method 600, the embedding matrix and the positional encoding matrix are obtained and combined in accordance with known methods (e.g. as described with reference to Figure 1 above). Then, in an additional step, the values of some of the rows of the encodings matrix are set to zero.

The first step 602 and second step 604 of the method 600 are the same as the first step 402 and the second step 404 of the method 400 of figure 4 and so a description will not be repeated here.

In a third step 606, a matrix embedding is obtained. The matrix embedding encodes each of the input tokens in the sequence of input tokens (i.e. all of the input tokens in the sequence). Standard matrix embedding methods are used, as will be familiar to a person skilled in the art. In this example, the matrix embedding is a four by four matrix.

In a fourth step 608, a positional encoding matrix is obtained. The positional encoding matrix encodes, for each of the input tokens in the sequence of input tokens (i.e. for all of the input tokens in the sequence), the position of that input token within the sequence of input tokens. Standard positional encoding techniques are used to obtain the positional encoding matrix, for example the sine and cosine functions described above. In this example, the positional encoding matrix is a four by four matrix.

In a fifth step 610, the matrix embedding and the positional encoding matrix are combined by matrix addition to obtain an encodings matrix (also a four by four matrix).

In a sixth step 612, some of the values of the encodings matrix are updated. Specifically, a subset of the values of the encodings matrix is selected based on the read rate. The read rate, r, is a positive integer and in this case r=1. Accordingly, the values of the first row of the encodings matrix and every second row thereafter are updated to zero. In this case, the first and third row are updated and the values set to zero. An example of an updated encodings matrix (after step 612 has been performed) is shown in Figure 5.

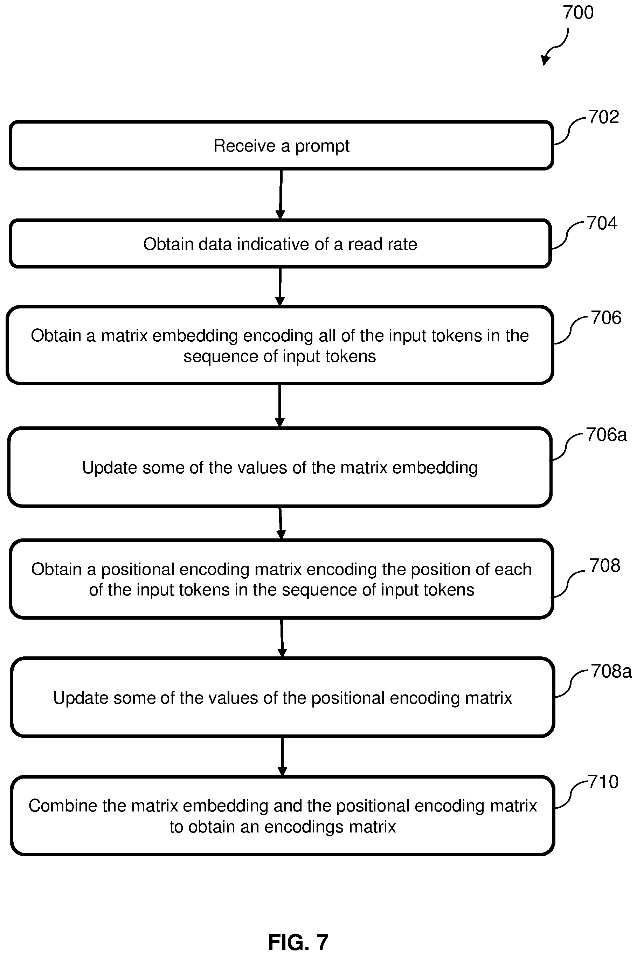

A second method 700 of obtaining the encodings matrix is illustrated in Figure 7. Reference numerals corresponding to those in Figure 4 are used, incremented by 300. By way of an overview of the second method 700, the embedding matrix and the positional encoding matrix are each obtained in accordance with known methods (e.g. as described with reference to Figure 1 above). Then, in two additional steps, the values of some of the rows of each of the matrix embedding and the positional encoding matrix are set to zero. The modified matrix embedding is then added (by matrix addition) to the modified positional encoding matrix to obtain the encodings matrix.

The first step 702 and second step 704 of the method 700 are the same as the first step 402 and the second step 404 of the method 400 of figure 4 and so a description will not be repeated here.

In a third step 706, a matrix embedding is obtained. The matrix embedding encodes each of the input tokens in the sequence of input tokens (i.e. all of the input tokens in the sequence). Standard matrix embedding methods are used, as will be familiar to a person skilled in the art. In this example, the matrix embedding is a four by four matrix. An example of such a matrix embedding 800 is illustrated in Figure 8.

In a fourth step 706a, some of the values of the matrix embedding are updated. Specifically, a subset of the values of the matrix embedding is selected based on the read rate. The read rate, r, is a positive integer and in this case r=1. Accordingly, the values of the first row of the matrix embedding and every second row thereafter are updated to zero. In this case, the first and third row are updated and the values set to zero. An example of such a modified matrix embedding 900 is illustrated in Figure 9.

In a fifth step 708, a positional encoding matrix is obtained. The positional encoding matrix encodes, for each of the input tokens in the sequence of input tokens (i.e. for all of the input tokens in the sequence), the position of that input token within the sequence of input tokens. Standard positional encoding techniques are used to obtain the positional encoding matrix, for example the sine and cosine functions described above. In this example, the positional encoding matrix is a four by four matrix.

In a sixth step 708a, some of the values of the positional encoding matrix are updated. Specifically, a subset of the values of the positional encoding matrix is selected based on the read rate. The read rate, r, is a positive integer and in this case r=1. Accordingly, the values of the first row of the positional encoding matrix and every second row thereafter are updated to zero. In this case, the first and third row are updated and the values set to zero. An example of such a modified positional encoding matrix 1000 is illustrated in Figure 10.

In a seventh step 710, the matrix embedding and the positional encoding matrix are combined by matrix addition to obtain an encodings matrix (also a four by four matrix, with the first and third row values set to zero).

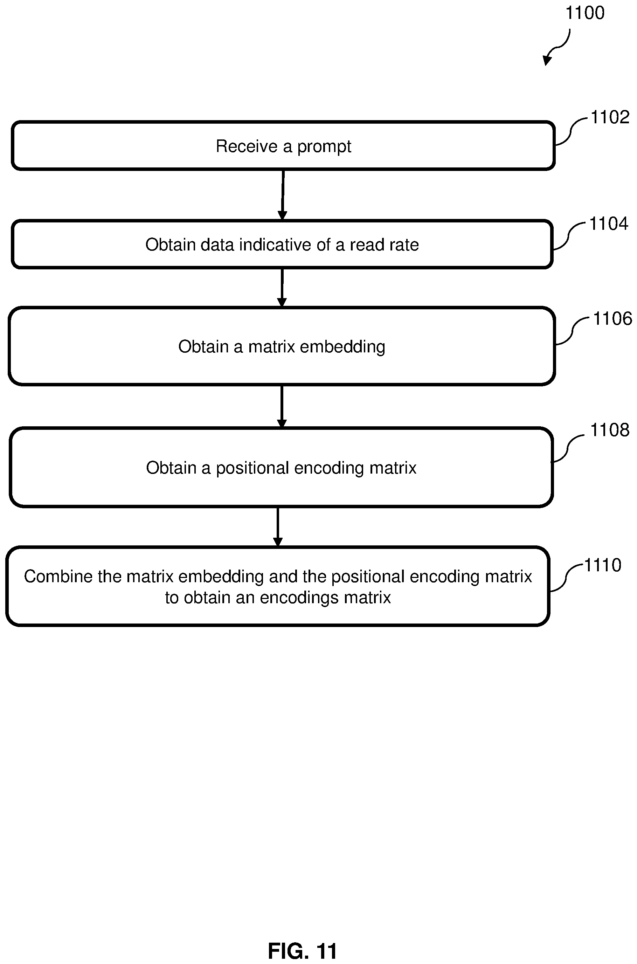

With reference to Figure 11, a computer-implemented method 1100 is described.

In a first step 1102, a prompt for an Al model is received. This prompt comprises a sequence of input tokens. In this example, each input token is a word and the sequence of input tokens is a string made up of those words. In this example, the sequence of input tokens is 'January February March April". In other embodiments, the input tokens could be any other type of data, for example characters and/or numbers. In some examples, the input tokens could each be data regarding a network, for example a network of computers.

The prompt is input by a user but in other example the prompt may be input by a software system or module, for example.

In a second step 1104, data indicative of a read rate is obtained. The data indicative of a read rate is a value, specifically a positive integer value. In this example, the data indicative of a read rate is a value r and r=1. The data is obtained from a memory location.

In a third step 1106, a matrix embedding of at least a portion of the sequence of input tokens is obtained. The matrix embedding is a matrix which encodes only a subset of the input tokens, the subset being selected in accordance with the read rate. Since r=1, in this example the matrix embedding encodes only the second and fourth input tokens (and not the first and third input tokens), as will be explained below. This result is achieved by first obtaining an intermediary matrix encoding which encodes all of the input tokens in the sequence of input tokens and then setting the values of some of the rows of the intermediary matrix encoding to zero. In other examples, a different method may be used. For example, only vector embeddings corresponding to the input tokens in the subset (i.e. the second and fourth tokens, in this example) may be calculated and then concatenated (in the appropriate order) with vectors of the same length consisting of zero-values.

In a fourth step 1108, a positional encoding matrix is obtained. The positional encoding matrix only encodes the position each of a first subset of the input tokens within the sequence of input tokens (i.e. the second and fourth input tokens). The positional encoding matrix is calculated using sine and cosine functions in accordance with the read rate r. Sine and cosine functions are used to represent the position of each input token within the sequence as a vector. Sine and cosine functions are used because the values output by the functions are within a well-defined range which is also limited to low numerical values (i.e. the outputs are between -1 and +1), thereby avoiding the model needing to process large numbers. Such large numbers would arise if a standard indexing system was used (i.e. the first token having a position value of 0, the second token having a position value of 1 and so on) and the number of tokens was very large (e.g. for a long prompt). The outputs of the sine and cosine functions are also continuous in nature, thereby facilitating representation of many different positions of input tokens. The specific sine and cosine functions used are: $P \left(k,2i,r\right) = sin \left(\frac{k + r}{{n}^{\left(2i/d\right)}}\right)$ $P \left(k,2i+1,r\right) = cos \left(\frac{k + r}{{n}^{\left(2i/d\right)}}\right)$
k is the position of the given token in the input sequence (i.e. k=0 for the first token, k=1 for the second token and so on.)
d is the dimension of the output embedding space. In this example, d=4.
P(k,2i,r) is the positional function for mapping the position k in the r-selected input sequence to index (k,i) of the positional encoding matrix.
r is the read rate. In this example, r=1 but it may be any other positive integer.
i maps onto the matrix column indices. 0 ≤ i < (d/2) It can be seen from the equations above that for odd-numbered matrix columns a cosine function is used and for even-numbered matrix columns a sine function is used.
n is a user-defined scalar. In this example n=100.

It can be seen that r has the effect of incrementing the position, k, of the relevant input token such that the row for k=0 is skipped over (because k is effectively changed from 0 to 1 by the presence of r in the sine and cosine functions above, which increments k by 1). The resulting positional encoding matrix is one with encoding values for the second and fourth rows (corresponding to the second and fourth input tokens, i.e. the words 'February' and 'April') and zero values for the first and third rows, e.g. as in the matrix 1000 in Figure 10.

Accordingly, less processing is required in order to obtain the positional encoding matrix. Fewer computational resources are therefore required (and/or the processing time is reduced).

Referring back to figure 11, in a fifth step 1110 the matrix embedding and the positional encoding matrix are combined to produce an encodings matrix. In this embodiment, this is done by matrix addition but in other embodiments different methods may be used, e.g. matrix concatenation.

As explained above, in the method of 1100 modified sine and cosine functions are used to implement a read rate. In other embodiments, different functions may be used to implement the read rate.

In a first example, sine and cosine functions may be used, as follows: $P \left(k,2i,r\right) = sin \left(\frac{kr}{{n}^{\left(2i/d\right)}}\right)$ $P \left(k,2i+1,r\right) = cos \left(\frac{kr}{{n}^{\left(2i/d\right)}}\right)$ The variables k,i,r,n and d have the same meaning and values as above and so a description will not be repeated here. In this example, as compared to the sine and cosine functions described above with reference to method 1100 of figure 11, the read rate r is applied as a multiple of k (rather than an addition to k) within the sine and cosine functions. In this example r is a positive integer and r is greater than or equal to 2. The subset of input tokens (i.e. those input tokens whose position within the sequence of input tokens is encoded by the positional encoding matrix) comprises every rth input token. For a read rate r=2, the subset of input tokens would comprise the 2^{nd}, 4^{th}, 6^{th} etc. input tokens. For a read rate of r=3, the subset of input tokens would comprise the 3^{rd}, 6^{th}, 9^{th} etc. input tokens.

In a second example, a gaussian function could be used instead of sine and cosine functions.

In other examples, different mathematical functions could be used.

Some of the embodiments described above involve obtaining a matrix embedding of the sequence of input tokens with some of the rows set to zero (so that when the matrix embedding is combined with the positional encoding matrix, with some rows also set to zero, the result is an encodings matrix with some rows with values of zero). However, in some embodiments, the step of combining the matrix embedding with the positional encodings matrix may comprise adding the matrices in such a way that the resulting encodings matrix has zero-values in the right rows. For example, combining the matrix embedding and the positional encoding matrix may comprise :
- for rows of the positional encoding matrix that comprise non-zero values, adding the vectors (rows) as normal
- for rows of the positional encoding matrix that comprise zero-values, not adding the relevant row of the matrix embedding to the relevant row of the positional encoding matrix.
In this way, the zeroes of the positional encoding matrix may be preserved in the resulting encodings matrix.

As described above, the output of various methods described herein is the encodings matrix which encodes only some of the input tokens and their respective position within the sequence of input tokens. An advantage of using such a matrix which has zero-values for the input tokens which are not encoded (rather than, for example, ignoring some of the input tokens completely) is that some contextual information about the sequence is preserved and fed into the model. In particular, the fact that there are additional words in the sequence is relevant and can be used by the model to generate a more accurate response. For example, in the sentence 'January February March April', the encodings matrix may only encode the words 'February' and 'April' but the zero-values rows corresponding to 'January' and 'March' effectively tell the model that there is a word in the first and third positions (just not what that word is).

Any of the methods described herein which output an encodings matrix may be used as part of a longer method. For example, the method may comprise passing the encodings matrix to another component or layer of the Al model. Referring back to the transformer models described with reference to Figures 1, 2 and 3, the method disclosed herein of generating an encoding matrix may be used at any suitable point within the transformer model. For example, the model 100 described with reference to Figure 1 is an encoder-decoder model. In such a model, the methods of obtaining an encodings matrix as described herein may be used in both the encoding block 100a and the decoder block 100b. It will be appreciated that if an encodings matrix in accordance with the present invention is used in one of the encoder block 100a and the decoder block 100b, it should also be used in the other of the encoder block 100a and the decoder block 100b to ensure the information received by the decoder module 110 from the encoder block 100a is in the same format as the information received from the encodings module 106b of the decoder block 100b.

The present invention may also be used in an encoder-only model such as the model 200 described with reference to figure 2. The invention may be implemented by the embedding module 202a and/or the position encoding module 204a and/or the encodings module 206a.

The present invention may also be used in a decoder-only model such as the model 300 described with reference to figure 3. The invention may be implemented by the embedding module 302b and/or the position encoding module 304b and/or the encodings module 306b.

The present invention may be used by any other type of Al model.

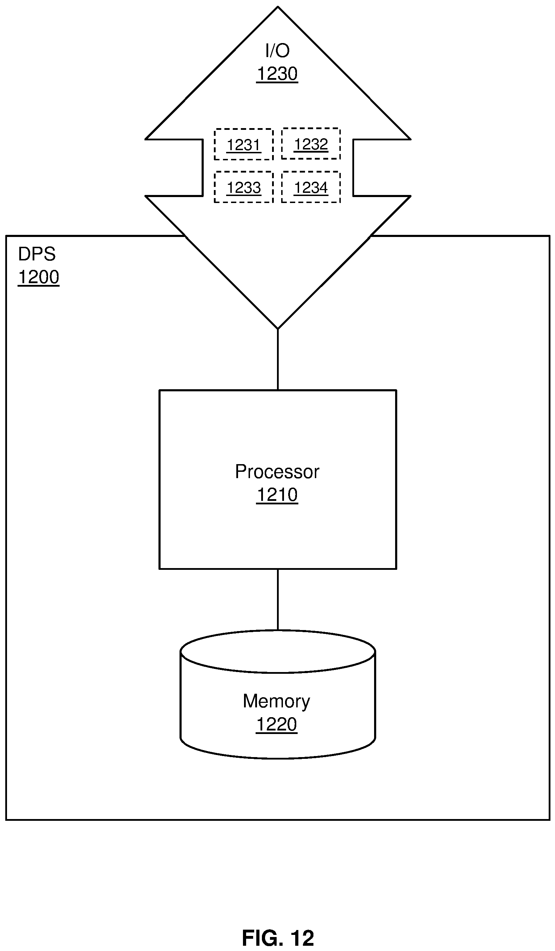

Figure 12 schematically illustrates an example data processing system (DPS) 1200 capable of performing any of the methods described above. It comprises a processor 1210 operably coupled to both a memory 1220 and an interface (I/O) 1230.

The memory 1220 can optionally comprise computer program instructions which, when the program is executed by the processor 1210, cause the data processing system 1200 to carry out any of the methods described herein. Alternatively or additionally, the interface 1230 can optionally comprise one or both of a physical interface 1231 configured to receive a data carrier having such instructions stored thereon and a receiver 1232 configured to receive a data carrier signal carrying such instructions.

The receiver 1232, when present, can be configured to receive messages. It can comprise one or more wireless receiver modules and/or one or more wired receiver modules. The interface 1230 can optionally comprise a transmitter 1233 configured to transmit messages. The transmitter 1233, when present, can comprise one or more wireless transmitter modules and/or one or more wired transmitter modules.

The interface 1230 can optionally comprise one or more user interface devices 1234. One or more of the user interface devices may be configured to display a response output by the Al model.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions. Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description, it will be evident to a person skilled in the art that various modifications may be made within the scope of the invention.

The preceding description is presented to enable any person skilled in the art to make and use the system and/or perform the method of the invention and is provided in the context of a particular application. Various modifications to the disclosed examples will be readily apparent to those skilled in the art. It is intended that the specification be considered as exemplary only.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

User devices can include, without limitation, static user devices such as PCs and mobile user devices such as smartphones, tablets, laptops and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

As mentioned above, the methods and systems described herein may be used in conjunction with any type of Al model. Some such AI models may require positional encoding, as described above. Some other models may not require positional encoding (for example where tokens in a sequence are processed one after the other, rather than in parallel which is the case for transformer models). Accordingly, the invention may not involve the use of positional encoding. Various features described above may be applied to such systems and methods which do not involve the use of positional encoding as appropriate. The following is disclosed:
1. A computer-implemented method comprising:
   receiving a prompt for an artificial intelligence, Al, model, the prompt comprising a set of input tokens;
   obtaining data indicative of a read rate;
   obtaining a matrix embedding of at least some of the set of input tokens, wherein the matrix embedding encodes only a first subset of the set of input tokens, wherein the first subset comprises fewer tokens than the set of input tokens and wherein the first subset of the input tokens is determined based on the read rate.
2. The computer-implemented method of item 1, wherein:
   the set of input tokens comprises a second subset of input tokens, different to the first subset;
   the matrix embedding comprises a vector corresponding to each of the input tokens in the set;
   for each of the input tokens in the first subset, the corresponding vector is a vector embedding which encodes the respective input token; and
   for each input token in the second subset of input tokens, the corresponding vector is a vector consisting of a pre-determined value.
3. The computer-implemented method of item 3, wherein obtaining the matrix embedding comprises obtaining vector embeddings for all of the input tokens in the set of input tokens and then setting the values of the vectors corresponding to the input tokens in the second subset of input tokens to a pre-determined value.
4. The computer-implemented method of item 3, wherein obtaining the matrix embedding comprises obtaining vector embeddings only for the input tokens in the first subset.
5. The computer-implemented method of any preceding item, wherein the input tokens are any of: words, characters and network data.
6. The computer-implemented method of any preceding item wherein the Al model is a large language model.
7. The computer-implemented method of any preceding item wherein obtaining data indicative of a read rate comprises determining the read rate based on the number of input tokens in the set.
8. The computer-implemented method of any preceding item comprising:
   generating a response to the prompt based on the matrix embedding; and outputting the response.
9. An artificial intelligence, Al, model comprising a module which is configured to carry out the method of any preceding item.
10. A computer system including a processor and memory storing computer program code for performing the steps of any of items 1 to 8.
11. A computer program comprising instructions which, when the program is executed by a computer, cause the computer to carry out the method of any of items 1 to 8.
12. A computer-readable data carrier having stored thereon the computer program of item 11.

## Claims

1. A computer-implemented method comprising:
receiving a prompt for an artificial intelligence, Al, model, the prompt comprising a sequence of input tokens;
obtaining data indicative of a read rate;
obtaining a matrix embedding of at least some of the input tokens of the sequence of input tokens;
obtaining a positional encoding matrix which encodes a position of each of at least some of the input tokens within the sequence of input tokens; and
combining the matrix embedding and the positional encoding matrix to generate an encodings matrix, wherein the encodings matrix encodes only:
a first subset of the sequence of input tokens, wherein the first subset comprises fewer tokens than the sequence of input tokens; and
a position of each of the first subset of input tokens within the
sequence of input tokens;
wherein the first subset of the sequence of input tokens is determined based on the read rate.

2. The computer-implemented method of claim 1, wherein:
the sequence of input tokens comprises a second subset of input tokens, different to the first subset;
the positional encoding matrix comprises a vector corresponding to each of the input tokens in the sequence of input tokens;
for each of the input tokens in the first subset, the corresponding vector is a positional encoding vector which encodes the position of the respective input token within the sequence of input tokens; and
for each of the input tokens in the second subset, the corresponding vector is a vector consisting of a pre-determined value.

3. The computer-implemented method of claim 2, wherein obtaining the positional encoding matrix comprises obtaining positional encoding vectors only for the first subset of input tokens.

4. The computer-implemented method of claim 2 or 3, wherein obtaining the positional encoding matrix comprises calculating the values of the matrix using one or more mathematical functions, wherein each of the one or more mathematical functions is a function of the read rate.

5. The computer-implemented method of any preceding claim, wherein:
the sequence of input tokens comprises a second subset of input tokens, different to the first subset;
the matrix embedding comprises a vector corresponding to each of the input tokens in the sequence of input tokens;
for each of the input tokens in the first subset, the corresponding vector is a vector embedding which encodes the respective input token; and
for each of the input tokens in the second subset, the corresponding vector is a vector consisting of a pre-determined value.

6. The computer-implemented method of claim 5, wherein obtaining the matrix embedding comprises obtaining vector embeddings for all of the input tokens in the sequence of input tokens and then setting the values of the vectors corresponding to the input tokens in the second subset to a pre-determined value.

7. The computer-implemented method of any preceding claim wherein the input tokens are any of: words, characters and network data.

8. The computer-implemented method of any preceding claim wherein the Al model is a transformer model.

9. The computer-implemented method of any preceding claim wherein combining the matrix embedding and the positional encoding matrix comprises adding the matrix embedding and the positional encoding matrix.

10. The computer-implemented method of any preceding claim wherein obtaining data indicative of a read rate comprises determining the read rate based on the number of input tokens in the sequence.

11. The computer-implemented method of any preceding claim comprising:
generating a response to the prompt based on the encodings matrix; and outputting the response.

12. An artificial intelligence, Al, model comprising a module which is configured to carry out the method of any preceding claim.

13. A computer system including a processor and memory storing computer program code for performing the steps of any of claims 1 to 11.

14. A computer program comprising instructions which, when the program is executed by a computer, cause the computer to carry out the method of any of claims 1 to 11.

15. A computer-readable data carrier having stored thereon the computer program of claim 14.
